# EUROPÄISCHE PATENTSCHRIFT

(11) **EP 1 942 065 B1**
(45) Veröffentlichungstag und Bekanntmachung des Hinweises auf die Patenterteilung: **21.10.2009**
(21) Anmeldenummer: 07022071.0
(22) Anmeldetag: 14.11.2007
(51) Int. Cl.: B65G 25/02

(54) **Hubbalkenförderer**
Lifting bar conveyor
Transporteur de longeron mobile

(30) Priorität: 08.01.2007 DE 102007002010
(43) Veröffentlichungstag der Anmeldung: 09.07.2008
(73) Patentinhaber: BWG BERGWERK- UND WALZWERK-MASCHINENBAU GMBH, D-47051 Duisburg (DE)
(72) Erfinder: Beuther Herbert, 47048 Duisburg (DE); Kalbfleisch Wolfgang, 46519 Alpen (DE); Noé Andreas, 47647 Kerken (DE)
(74) Vertreter: von dem Borne, Andreas

(56) Entgegenhaltungen:
- US-A- 4 687 092
- US-A- 5 025 912

## Beschreibung

Die Erfindung betrifft einen Hubbalkenförderer für den taktweisen Transport von Metallbunden bzw. Blechbunden, Blechpaketen oder dergleichen Transportgut, mit zumindest einem zwischen seitlichen Auflagerflächen mittels Hubvorrichtungen heb- und senkbaren sowie mittels zumindest eines Fahrantriebes in Transportrichtung bzw. in Längsrichtung verfahrbaren Hubbalken. Ein derartiger Hubbalkenförderer ist bereits aus US-A-5025912 bekannt. Die Blechbunde, das heißt die aufgewickelten Metallbänder, werden auch als Coils bezeichnet. Vorzugsweise weist ein solcher Hubbalkenförderer eine Vielzahl von in Transportrichtung hintereinander angeordneten Hubbalken auf, welche über den Fahrantrieb taktweise gemeinsam vor- und zurückbewegt werden. Dabei sind der oder die Hubbalken mittels der Hubvorrichtungen einzeln oder gemeinsam heb- und senkbar, so dass die auf den seitlichen Auflagerflächen aufliegenden Blechbunde oder dergleichen taktweise bzw. schrittweise entlang der Transportrichtung transportiert werden können. Ein solcher Hubbalkenförderer kann als Transportanlage beispielsweise in Walzwerke integriert werden. Sie sind jedoch geeignet für den Einsatz in allen Arten von Walzwerken und Prozesslinien, wie zum Beispiel Beizlinien, Oberflächenbeschichtungsanlagen, Scherenlinien, Transportanlagen für die Verbindung verschiedener Anlagen usw.. Solche Hubbalkenförderer zeichnen sich durch hohe Stabilität und Flexibilität aus. Die einfache Ausbildung der Übergabestellen ermöglicht die winklige Abzweigung aus der Förderlinie, die Reversierbarkeit sowie die voneinander unabhängige Auf- und Abgabe der Bunde. Weitere Vorteile von Hubbalkenförderern sind der baukastenartige Aufbau sowie die flurebene Förderfläche. Insofern eignen sich solche Hubbalkenförderer zum Beispiel für den Transport von Bunden, zum Beispiel Warmbunden im Auslauf von Warmwalzwerken. Sie können sowohl im Einlauf (Zufuhr der Bunde) als auch im Auslauf (Abtransport der Bunde) eingesetzt werden und eignen sich für den Transport warmer und kalter Bunde.

Ein weiterer Hubbalkenförderer der eingangs beschriebenen Art ist beispielsweise aus der DE 1 283 149 bekannt. Der Fahrantrieb ist als Fahrzylinder ausgebildet, welcher den Hubbalken taktweise vor- und zurückbewegt.

Aus der DE 30 16 158 C2 kennt man ferner einen Hubbalkenförderer, bei welchem der Fahrantrieb bzw. Balkenantrieb als Zahnstangenantrieb mit einem Hydromotor und einem Antriebsritzel ausgebildet ist, welches in einer auf der Unterseite des Hubbalkens angeordnete Zahnstange eingreift.

Derartige Hubbalkenförderer haben sich bewährt. In der Praxis hat sich jedoch gezeigt, dass der Transportweg bzw. Förderweg begrenzt ist, da die Gesamtbeladung einer Vielzahl hintereinander angeordneter Hubbalken sehr groß wird. Dieses ist mit einer verhältnismäßig kostenaufwändigen Konstruktion verbunden. Aus diesem Grunde werden insbesondere für große Förderwege in der Praxis häufig Kettenförderer eingesetzt. Derartige Kettenförderer werden vorwiegend bei langen Förderstrecken und beispielsweise für Warmbund-Kühlstrecken eingesetzt. Eine mit Hubbalkenförderern vergleichbare robuste Bauweise lässt sich mit derartigen Kettenförderern jedoch nicht ohne Weiteres erreichen. - Hier setzt die Erfindung ein.

Der Erfindung liegt die Aufgabe zugrunde, einen Hubbalkenförderer für den taktweisen Transport von Blechbunden, Blechpaketen oder dergleichen Transportgut der eingangs beschriebenen Art zu schaffen, welcher sich durch eine einfache, kostengünstige und zugleich robuste Bauweise auszeichnet. Insbesondere soll der erfindungsgemäße Hubbalkenförderer sich für lange Förderstrecken eignen und flexibel einsetzbar sein.

Die Aufgabe wird mit dem Hubbalken förderer gemäss Patentanspruch 1 gelöst. Der zweite Fahrzylinder ist damit relativ zu dem ersten Fahrzylinder (als Ganzes) verfahrbar gelagert und dazu an die Kolbenstange des ersten Fahrzylinders angeschlossen. Die Kolbenstange des zweiten Fahrzylinders arbeitet (mittelbar oder unmittelbar) auf den Hubbalken. Die Erfindung geht dabei von der Erkenntnis aus, dass sich die Einsatzmöglichkeiten von Hubbalkenförderern erheblich erweitern lassen, wenn nicht lediglich mit einem (einzigen) hydraulischen Fahrzylinder gearbeitet wird, sondern wenn zwei oder auch mehrere Fahrzylinder gleichsam in Reihe bzw. in Serie hintereinander geschaltet werden, so dass der mit einem einzigen Transporttakt erreichbare Förderweg erheblich vergrößert wird. Dabei hat die Erfindung erkannt, dass sich der Kolbenhub eines für einen Hubbalkenförderer eingesetzten Fahrzylinders in der Praxis nicht beliebig vergrößern lässt, da beispielsweise die Gefahr besteht, dass eine sehr lange Kolbenstange durchbiegt. Demgegenüber schlägt die Erfindung vor, dass mit zwei oder auch mehreren Fahrzylindern gearbeitet werden kann, die in ihrer Bauweise bzw. Dimensionierung jeweils den an sich bekannten Fahrzylindern entsprechen können, so dass die Anordnung insgesamt besonders stabil ist. Dennoch lässt sich ein deutlich vergrößerter Förderweg mit einem einzigen Fördertakt zurücklegen. Dieses hat nicht nur den Vorteil, dass mit einem einzigen Fördertakt ein größerer Weg zurückgelegt wird, sondern darüber hinaus besteht die Möglichkeit, die einzelnen Blechbunde oder dergleichen mit vergrößerten, zum Beispiel verdoppeltem Abstand auf dem Hubbalkenförderer anzuordnen bzw. zu transportieren, so dass bei insgesamt vergleichbarer Gesamtbeladung des Hubbalkenförderers ein deutlich vergrößerter Gesamtförderweg eingestellt werden kann. Damit kann der erfindungsgemäße Hubbalkenförderer auch die in der Praxis häufig eingesetzten Kettenförderer für lange Förderwege ersetzen. Denn im Vergleich mit herkömmlichen Hubbalkenförderern verteilt sich eine vergleichbare Anzahl von Bunden bzw. Coils auf eine deutlich vergrößerte, zum Beispiel verdoppelte, Förderstrecke, so dass sich bei gleicher Hubleistung ein längerer Gesamtförderweg zurücklegen lässt. Die zwei oder mehr Fahrantriebe sind besonders bevorzugt als (hydraulische) Fahrzylinder ausgestattet. Die Erfindung umfasst jedoch auch andere Antriebsarten, wobei die zwei oder mehr "Einzelantriebe" (stufenartig) in Serie hintereinander geschaltet sind.

Bevorzugte Weiterbildungen der Erfindung werden im Folgenden erläutert. So ist der erste Fahrzylinder im Wesentlichen ortsfest (jedoch gegebenenfalls schwenkbar) angeordnet. Dazu kann der erste Fahrzylinder fest oder auch schwenkbar auf einem ortsfesten Lagerbock angeordnet sein. An die Kolbenstange dieses ersten Fahrzylinders ist (zum Beispiel endseitig) der zweite Fahrzylinder angeschlossen, der folglich bei Betätigung des ersten Fahrzylinders vollständig vor- oder zurückbewegt wird. Dazu kann an die Kolbenstange des ersten Fahrzylinders (endseitig) ein in Transportrichtung verfahrbarer Fahrwagen angeschlossen sein, an welchem der zweite Fahrzylinder befestigt ist. Im Zuge der Betätigung des ersten Fahrzylinders wird folglich mit der Kolbenstange des ersten Fahrzylinders der zweite Fahrzylinder insgesamt entlang der Transportrichtung vor- oder zurückverfahren, wobei der zweite Fahrzylinder dann selbst ebenfalls betätigbar ist, indem die Kolbenstange des zweiten Fahrzylinders ein- oder ausgefahren wird. Vorzugsweise ist diese Kolbenstange des zweiten Fahrzylinders dann endseitig mittelbar oder unmittelbar an den Hubbalken angeschlossen. Die Erfindung umfasst dabei auch Ausführungsformen, bei welchen ein dritter oder auch vierter Fahrzylinder und so weiter eingesetzt werden, die insgesamt in Reihe hintereinander geschaltet werden, wobei die Kolbenstange des letzten Fahrzylinders an den Hubbalken angeschlossen ist.

Nach bevorzugter Weiterbildung der Erfindung ist der Fahrwagen, an welchem der zweite Zylinder angeschlossen ist, auf einer oder auf mehreren Zylinder-Fahrschienen verfahrbar. Verfahrbar meint im Rahmen der Erfindung eine rollende und/oder gleitende Bewegung. Der Zylinder-Fahrwagen kann folglich beispielsweise mittels Rollen und/oder auf Gleitstücken oder dergleichen auf Schienen geführt sein.

Ferner schlägt die Erfindung vor, dass die Kolbenstange des zweiten Fahrzylinders (bzw. im Falle weiterer Fahrzylinder die Kolbenstange des letzten Fahrzylinders) über zumindest einen Verbindungssteg bzw. ein Anschlussstück an den Hubbalken angeschlossen ist. Diese Kolbenstange kann dabei schwenkbar an diesen Verbindungssteg bzw. das Anschlussstück angeschlossen sein. Dabei geht die Erfindung von der Erkenntnis aus, dass es zweckmäßig ist, den gesamten Fahrantrieb mit seinen beiden Zylinderkolbenanordnungen unterhalb des eigentlichen Hubbalkenförderers anzuordnen. Denn die Hubvorrichtungen des Hubbalkenförderers sind in an sich bekannter Weise auf sich in Transportrichtung erstreckenden Fahrschienen verfahrbar. Dann ist es vorteilhaft, wenn der gesamte Fahrantrieb unterhalb dieser Fahrschienen angeordnet ist, wobei der Höhenunterschied zwischen der Kolbenstange des zweiten Fahrzylinders und dem Hubbalken über das bevorzugt eingesetzte Verbindungsstück überbrückt wird. Auf diese Weise lässt sich insgesamt ein besonders kompakter Aufbau realisieren.

Es liegt im Rahmen der Erfindung, dass der erste Fahrzylinder und/oder der zweite Fahrzylinder als doppelt wirkende Differentialzylinder ausgebildet sind, so dass sowohl Zug- als auch Druckkräfte übertragen werden können und die Hubbalken entlang der Transportrichtung vor- und zurückbewegt werden können. Der oder die Fahrzylinder können dabei weggesteuert sein.

Es liegt ferner im Rahmen der Erfindung, dass der erste Fahrzylinder und der zweite Fahrzylinder einzeln und/oder gemeinsam betätigbar sind. Ferner besteht die Möglichkeit, dass der erste Fahrzylinder und der zweite Fahrzylinder simultan betätigt werden. Insgesamt zeichnet sich die Erfindung in vorteilhafter Weiterbildung durch ihren flexiblen Einsatz aus. Denn sofern die beiden Fahrzylinder nacheinander oder auch simultan betätigt werden, lassen sich in der beschriebenen Weise die hohen Fahrwege erreichen, so dass die gewünschte Beladung mit hohem Coil-Abstand eingestellt wird. Es liegt jedoch auch im Rahmen der Erfindung, dass lediglich einer der beiden Fahrzylinder, nämlich entweder der erste Fahrzylinder oder der zweite Fahrzylinder betätigt werden, so dass dann gleichsam "herkömmlich" gearbeitet wird. Es wird dann in an sich bekannter Weise mit herkömmlicher bzw. doppelter Beladung des Hubbalkens gearbeitet. Die jeweilige Betriebsweise kann an die Gegebenheiten angepasst werden. So kann es beispielsweise zweckmäßig sein, mit lediglich einen Fahrzylinder zu arbeiten und folglich eine hohe Beladung des Hubbalkens einzustellen, wenn der Hubbalkenförderer als gleichsam Puffer bzw. Zwischenspeicher eingesetzt werden soll.

Der Förderhub, der aus der Praxis bekannten Fahrzylinder von Hubbalkenförderern beträgt beispielsweise drei bis vier Meter. Es liegt daher im Rahmen der Erfindung, dass der erste Fahrzylinder und/oder der zweite Fahrzylinder ebenfalls einen solchen Förderhub vorsehen, so dass dann insgesamt bei Einsatz der beiden Fahrzylinder der doppelte Förderhub erzeugt wird. Dabei schlägt die Erfindung vor, dass der Förderhub des ersten Fahrzylinders und/oder des zweiten Fahrzylinders jeweils in etwa zwei Meter bis fünf Meter, zum Beispiel drei Meter bis fünf Meter, vorzugsweise drei Meter bis vier Meter beträgt.

Der erfindungsgemäße Hubbalkenförderer wird vorzugsweise als Förderer für lange Förderstrecken eingesetzt. Dabei lässt er sich ohne Weiteres mit anderen Hubbalkenförderern oder auch Förderern anderer Gattung kombinieren. So kann es zweckmäßig sein, einen erfindungsgemäßen Hubbalkenförderer mit Doppelzylinderantrieb an einen Hubbalkenförderer mit "einfachem" Fahrantrieb anzuschließen, insbesondere wenn im Bereich dieses einfachen Fahrantriebes eine Bundbearbeitung vorgesehen ist, während dann der erfindungsgemäße Hubbalkenförderer mit Doppelzylinderantrieb der Überbrückung großer Förderstrecken dient.

Eine Ausführungsform der Erfindung wird anhand der folgenden Zeichnungen näher erläutert. Es zeigen:
- Fig. 1: in schematischer Darstellung einen in ein Walzwerk integrierten bzw. an ein Walzwerk angeschlossenen erfindungsgemäßen Hubbalkenförderer in einer Seitenansicht,
- Fig. 2: eine Draufsicht auf einen Ausschnitt der Fig. 1,
- Fig. 3: einen vereinfachten Querschnitt durch einen Hubbalkenförderer,
- Fig. 4: einen vergrößerten Ausschnitt aus dem Gegenstand nach Fig. 1.

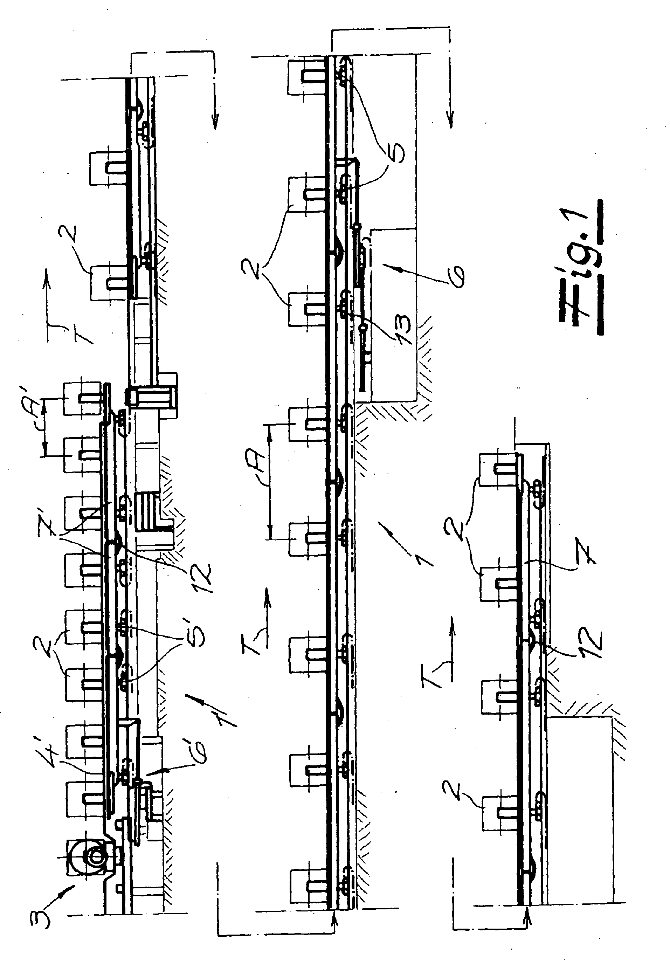

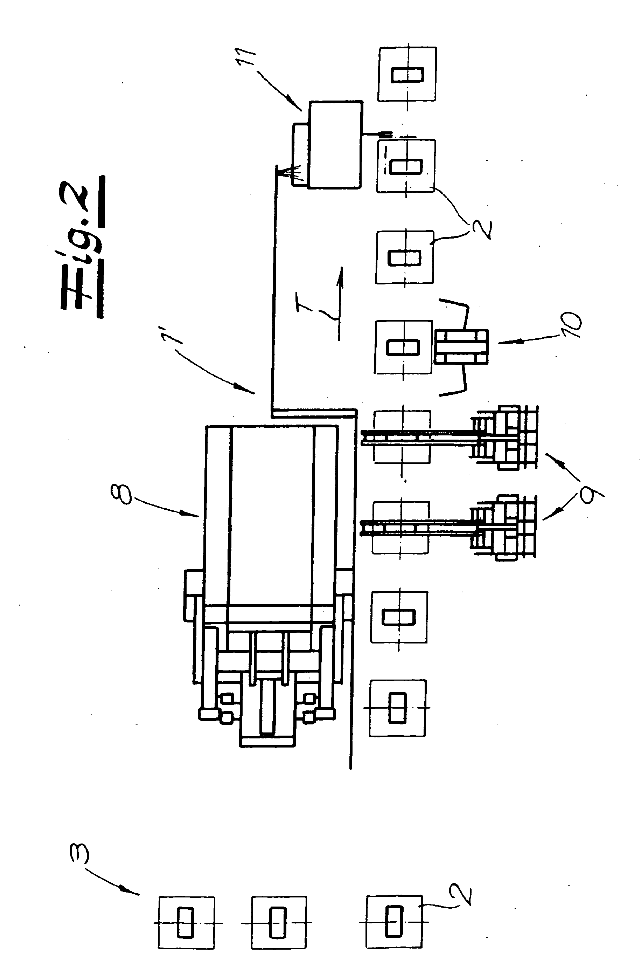

In den Figuren ist ein erfindungsgemäßer Hubbalkenförderer 1 für den taktweisen Transport von Blechbunden 2 dargestellt, welche auch als Coils bezeichnet werden. Der erfindungsgemäße Hubbalkenförderer 1 ist in eine Transportanlage bzw. Fördereranlage integriert, welche sich an ein Walzwerk anschließt. In Fig. 1 ist angedeutet, dass die im Walzwerk erzeugten und zu Blechbunden 2 aufgewickelten Bänder (zum Beispiel Warmbänder) mittels einer Zuführeinrichtung 3 einem (ersten) Hubbalkenförderer 1' zugeführt werden, an den sich dann endseitig der erfindungsgemäße (zweite) Hubbalkenförderer 1 anschließt. Der Hubbalkenförderer 1' weist mehrere sich zwischen seitlichen Auflagerflächen mittels Hubvorrichtungen 5' heb- und senkbaren sowie mittels eines Fahrantriebes 6' in Transportrichtung T bzw. Längsrichtung verfahrbaren Hubbalken 7' auf. Dabei ist der Fahrantrieb 6' des Hubbalkenförderers 1' in an sich bekannter Weise als (einfacher) hydraulischer Zylinderantrieb 6' ausgebildet. Durch taktweises Vor- und Zurückfahren der Hubbalken 7' sowie entsprechendes Anheben und Absenken der Hubbalken 7' lassen sich die auf den Auflagerflächen 4' aufliegenden Blechbunde 2 taktweise in Förderrichtung T (von links nach rechts) transportieren. Dabei ist in Fig. 2 angedeutet, dass diesem ersten Hubbalkenförderer 1' mehrere Bearbeitungsstationen zugeordnet sind, zum Beispiel eine Inspektionsvorrichtung 8, eine Vorrichtung 9 zur Umfangsumreifung, eine Vorrichtung 10 zur Augenumreifung sowie gegebenenfalls eine Vorrichtung 11 zur Markierung der Blechbunde 2.

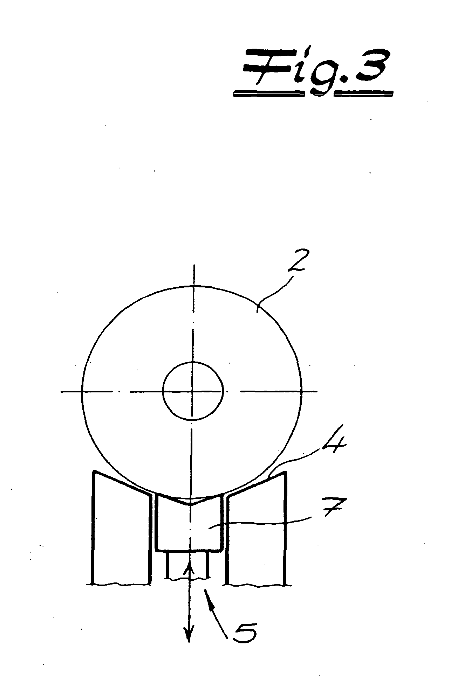

An diesem (ersten) Hubbalkenförderer 1' mit herkömmlichem Fahrantrieb 6' schließt sich dann endseitig (und in Fig. 1 rechts dargestellt) der erfindungsgemäße (zweite) Hubbalkenförderer 1 für den taktweisen (Weiter-) Transport der Blechbunde 2 an. Es ist erkennbar, dass dieser Hubbalkenförderer 1 der Überbrückung einer großen Förderstrecke dient und dazu aus einer Vielzahl von Hubbalken 7 (im Ausführungsbeispiel sieben Hubbalken) zusammengesetzt ist. Die einzelnen Hubbalken 7 sind mittels Verbindungsvorrichtungen 12 miteinander verbunden, so dass sie stets gemeinsam vor- und zurückgefahren werden, jedoch einzeln oder auch gemeinsam anhebbar und absenkbar sind. Dazu sind jedem einzelnen Hubbalken 7 jeweils zwei (oder auch mehrere) Hubvorrichtungen 5 zugeordnet, welche im Ausführungsbeispiel als hydraulische Hubzylinder 5 ausgebildet sind. Der einzelnen Hubantriebe 5 sind auch Fahrwagen 13 angeordnet, die wiederum auf entlang der Transportrichtung T verlaufender Fahrschienen 14 gleitend und/oder rollend verfahrbar sind. Die seitlichen Auflagerflächen 4 werden von einem oder mehreren Tragbalken gebildet, die sich durchgehend oder auch einfach oder mehrfach unterbrochen über die gesamte Förderstrecke erstrecken. Durch Anheben eines oder mehrerer Hubbalken 7 lassen sich ein oder mehrere Blechbunde 2 von den Auflagerflächen 4 abheben. Anschließend lassen sich der oder die Hubbalken 7 dann mit den Blechbunden 2 in Transportrichtung T um ein vorgegebenes Maß vorfahren. Durch Absenken des oder der Hubbalken 7 lassen sich die jeweiligen Blechbunde 2 dann an gleichsam vorgefahrener Position auf die Auflagerflächen 4 absenken. Anschließend lassen sich die Hubbalken 7 über den Fahrantrieb 6 in die Ausgangsposition zurückfahren, so dass dann in einem weiteren Takt die Blechbunde 2 weitertransportiert werden können. In Fig. 3 ist dabei (beispielhaft) angedeutet, dass der Hubbalkenförderer 1 als sogenannter Muldenhubbalkenförderer ausgebildet sein kann, bei denen der Hubbalken 7 bzw. Fahrbalken längs gemuldet ist und die seitlichen Auflagerflächen 4 gewölbt ausgebildet sind. Die Erfindung kann aber für sämtliche Arten von Hubbalkenförderern angewendet werden, zum Beispiel für Muldenhubbalken, Höckerhubbalken, Plattenhubbalken, aber auch für weitere Ausführungsformen, die produktabhängig entwickelt werden.

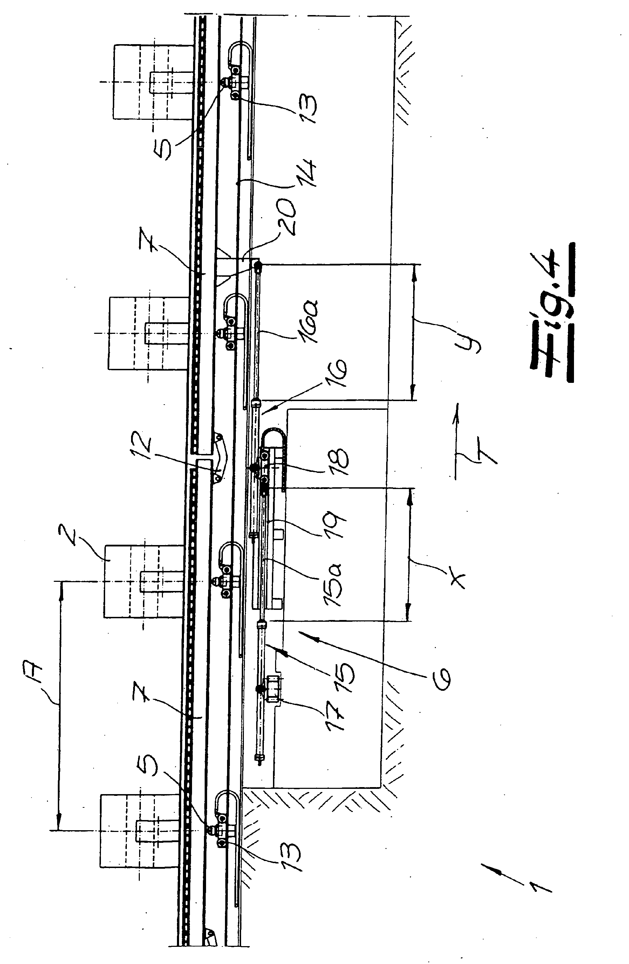

Insbesondere Fig. 4 macht nun deutlich, dass der Fahrantrieb 6 des erfindungsgemäßen Hubbalkenförderers 1 als hydraulischer Doppelzylinderantrieb ausgebildet ist und dazu einerseits einen ersten Fahrzylinder 15 aufweist und andererseits einen zweiten Fahrzylinder 16, welcher mittels des ersten Fahrzylinders 15 entlang der Transportrichtung T verfahrbar ist. Der zweite Fahrzylinder 16 ist folglich relativ zu dem ersten Fahrzylinder 15 verfahrbar gelagert und dazu an die Kolbenstange 15a des ersten Fahrzylinders 15 angeschlossen. Die Kolbenstange 16a des zweiten Fahrzylinders 16 arbeitet wiederum auf den bzw. die Hubbalken 7. Dabei ist in Fig. 4 angedeutet, dass der erste Fahrzylinder 15 ortsfest (jedoch gegebenenfalls verschwenkbar) über zum Beispiel einen Lagerbock 17 in der Anlage angeordnet ist. Fig. 4 zeigt den ersten Fahrzylinder 15 mit vollständig ausgefahrener Kolbenstange 15a. Der Fahrhub x des ersten Fahrzylinders 15 beträgt im Ausführungsbeispiel etwa 3,5 bis 4 Meter. An die Kolbenstange 15a dieses ersten Fahrzylinders 15 ist dann endseitig ein Fahrwagen 18 angeschlossen, welcher auf einer oder mehreren Zylinder-Fahrschienen 19 verfahren wird, zum Beispiel gleitet und/oder rollt. An den Fahrwagen 18 ist der zweite Fahrzylinder 16 fest (jedoch gegebenenfalls schwenkbar) angeschlossen, so dass im Zuge der Betätigung des ersten Fahrzylinders 15 und folglich im Zuge des Ein- oder Ausfahrens der Kolbenstange 15a der gesamte zweite Fahrzylinder 16 mit der Kolbenstange 15a des ersten Fahrzylinders 15 vor- oder zurückgefahren wird. Unabhängig davon ist nun die Kolbenstange 16a des zweiten Fahrzylinders 16 ein- und ausfahrbar, wobei der Fahrhub y des zweiten Fahrzylinders im Ausführungsbeispiel ebenfalls 3,5 bis 4 Meter beträgt. Die Kolbenstange 16a des zweiten Fahrzylinders 16 ist endseitig an einen der Hubbalken 7 angeschlossen, und zwar unter Zwischenschaltung eines Verbindungssteges 20. In Fig. 4 ist angedeutet, dass die Kolbenstange 16a des zweiten Fahrzylinders 16 mit ihrem Stangenende schwenkbar an diesen Verbindungssteg 20 angeschlossen sein kann. Eine vergleichende Betrachtung der Fig. 1 und 4 macht nun deutlich, dass sämtliche Hubbalken 7 des Hubbalkenförderers 1 durch Betätigung des ersten Fahrzylinders 15 und/oder des zweiten Fahrzylinders 16 entlang der Transportrichtung T verfahren werden können. Dabei besteht die Möglichkeit, die beiden Fahrzylinder 15, 16 einzeln oder auch gemeinsam zu betätigen. Ferner besteht die Möglichkeit, dass die beiden Fahrzylinder 15, 16 simultan betätigt werden. In diesem Falle einer simultanen Betätigung sowohl des ersten Fahrzylinders 15 als auch des zweiten Fahrzylinders 16 lassen sich die Hubbalken 7 in einem einzigen Takt um gleichsam den doppelten Förderhub (x + y) transportieren, und zwar bei gleicher Taktzeit im Vergleich zu einem einfachen Fahrantrieb mit einem einzigen Fahrzylinder. Durch den doppelten Förderhub (x + y) ergibt sich auch ein vergrößerter Abstand (A = x + y) zwischen den einzelnen Blechbunden 2 auf den Hubbalken bzw. auf dem Auflagerbalken. Dieses ergibt sich unmittelbar aus einer vergleichenden Betrachtung des Blechbundabstandes A im Bereich des erfindungsgemäßen Hubbalkenförderers 1 mit dem Abstand A' der Blechbunde 2 in dem in Fig. 1 links dargestellten ersten Hubbalkenförderer 1', bei dem lediglich mit einem einzigen herkömmlichen Fahrzylinder 6' gearbeitet wird.

Fig. 1 zeigt den zweiten Hubbalkenförderer 1 in einer bevorzugten Betriebsart, die der Überbrückung möglichst großer Förderstrecken dient. In diesem Falle werden stets beide Fahrzylinder 15, 16 betätigt, so dass sich die beschriebenen doppelten Förderhübe pro Takt ergeben, welche mit den in Fig. 1 dargestellten großen Abständen A zwischen den Blechbunden 2 einhergehen. Es besteht jedoch optional auch die Möglichkeit, im Zuge des Transportes mit dem Hubbalkenförderer 1 lediglich einen der beiden Fahrantriebe 15 oder 16 einzusetzen, zum Beispiel lediglich den ersten Fahrantrieb 15 oder auch lediglich den zweiten Fahrantrieb 16. In einer solchen Betriebsweise wird dann pro Fördertakt der Hubbalken 7 lediglich um den Förderhub x oder y dieses einen Fahrzylinders 15 oder 16 bewegt, so dass auch ein auf dem Hubbalken 7 aufliegender Blechbund 2 lediglich um diesen Förderhub x oder y transportiert wird. Damit besteht nun die Möglichkeit, den Hubbalkenförderer mit höherer Beladung, zum Beispiel doppelter Beladung zu fahren. Eine solche Betriebsweise ist in Fig. 1 nicht dargestellt.

Im Übrigen ist in Fig. 4 angedeutet, dass der gesamte Fahrantrieb 6, bestehend aus erstem Fahrzylinder 15 und zweiten Fahrzylinder 16 unterhalb der Fahrschienen 14 für die Hubzylinder 5 angeordnet ist. Der Höhenunterschied zwischen der Kolbenstange 16a des zweiten Fahrzylinders 16 und der Unterseite des Hubbalkens 7 wird über das bereits beschriebene Verbindungsstück 20 ausgeglichen, welches im Ausführungsbeispiel im Wesentlichen vertikal orientiert ist.

Von besonderer Bedeutung ist im Rahmen der Erfindung, dass durch die Flexibilität des erfindungsgemäßen Hubbalkenförderers 1 eine gezielte Anpassung des Betriebes an die Gegebenheiten erfolgen kann. Werden folglich Coils mit hohem Gewicht erzeugt, so empfiehlt die Erfindung, dass unter Benutzung beider Zylinder 15, 16 mit "einfacher" Beladung und folglich hohem Coilabstand gearbeitet wird. Werden dagegen Coils 2 mit geringem Gewicht erzeugt, so besteht im Rahmen der Erfindung die Möglichkeit, den Hubbalkenförderer 1 mit gleichsam doppelter Beladung zu fahren. Dieses ist auch deshalb zweckmäßig, weil Coils mit geringem Gewicht regelmäßig auch mit verhältnismäßig kurzer Walzzeit erzeugt werden, so dass dann die Coils mit kurzer Taktzeit zugeführt und folglich auch weitertransportiert werden müssen.

Eine weitere vorteilhafte Anwendung des erfindungsgemäßen Hubbalkenförderers 1 stellt die Kombination eines solchen Hubbalkenförderers 1 mit einem an sich bekannten Wagenförderer dar. Denn durch den vergrößerten Förderhub lassen sich die an sich bekannten Förderwagen zum Beispiel zeitgleich mit zwei Coils in kürzester Zeit beladen, so dass ein besonders effizienter Wagentransport möglich wird. Diese Möglichkeit ist in den Figuren nicht dargestellt.

Der erfindungsgemäße Hubbalkenförderer lässt sich im Zusammenhang mit jeder Art von Walzwerken und Prozesslinien einsetzen, wie zum Beispiel Beizlinien, Oberflächenbeschichtungsanlagen, Scherenlinien, Transportanlagen für die Verbindung verschiedener Anlagen usw.. Sie können sowohl im Einlauf (Zufuhr der Bunde) als auch im Auslauf (Abtransport der Bunde) eingesetzt werden. Ferner kann der erfindungsgemäße Hubbalkenförderer als "Zwischenförderer" für den "Zwischentransport" zwischen verschiedenen Anlagenteilen dienen. Die erfindungsgemäßen Hubbalkenförderer eignen sich für den Transport von warmen und kalten Produkten, zum Beispiel warmen und kalten Bunden.

## Patentansprüche

1. Hubbalkenförderer (1) für den taktweisen Transport von Blechbunden (2), Blechpaketen oder dergleichen Transportgut,
mit zumindest einem zwischen seitlichen Auflagerflächen (4) mittels Hubvorrichtungen (5) heb- und senkbaren sowie mittels zumindest eines Fahrantriebes (6) in Transportrichtung (T) verfahrbaren Hubbalken (7), **dadurch gekennzeichnet, dass**
der Fahrantrieb (6) als Doppelantrieb, zum Beispiel Doppelzylinderantrieb mit zumindest einem ersten Fahrantrieb, zum Beispiel Fahrzylinder (15) und zumindest einem mittels des ersten Fahrantriebes (15) verfahrbaren zweiten Fahrantrieb, zum Beispiel Fahrzylinder (16), ausgebildet ist.

2. Hubbalkenförderer nach Anspruch 1, **dadurch gekennzeichnet, dass** der zweite Fahrantrieb, zum Beispiel Fahrzylinder (16) relativ zu dem ersten Fahrantrieb, zum Beispiel Fahrzylinder (15) verfahrbar gelagert ist und dazu zum Beispiel an die Kolbenstange (15a) des ersten Fahrzylinders (15) angeschlossen ist und dass die Kolbenstange (16a) des zweiten Fahrzylinders (16) auf den Hubbalken (7) arbeitet.

3. Hubbalkenförderer nach Anspruch 1 oder 2, **dadurch gekennzeichnet, dass** der erste Fahrzylinder (15) ortsfest aber gegebenenfalls schwenkbar gelagert ist.

4. Hubbalkenförderer nach einem der Ansprüche 1 bis 3, **dadurch gekennzeichnet, dass** an die Kolbenstange (15a) des ersten Fahrzylinders (15) ein in Transportrichtung verfahrbarer Fahrwagen (18) angeschlossen ist, an welchem der zweite Fahrzylinder (16) befestigt ist.

5. Hubbalkenförderer nach Anspruch 4, **dadurch gekennzeichnet, dass** der Fahrwagen (18) auf einer oder mehreren Zylinder-Fahrschienen (19) verfahrbar ist.

6. Hubbalkenförderer nach einem der Ansprüche 1 bis 5, **dadurch gekennzeichnet, dass** die Kolbenstange (16a) des zweiten Fahrzylinders (16) über zumindest einen Verbindungssteg (20) an den Hubbalken (7) angeschlossen ist.

7. Hubbalkenförderer nach Anspruch 6, **dadurch gekennzeichnet, dass** die Kolbenstange (16a) des zweiten Fahrzylinders (16) schwenkbar an den Verbindungssteg (20) angelenkt ist.

8. Hubbalkenförderer nach einem der Ansprüche 1 bis 7, wobei die Hubvorrichtungen (5) auf Fahrschienen (14) verfahrbar sind, **dadurch gekennzeichnet, dass** der erste Fahrzylinder (15) und der zweite Fahrzylinder (16) unterhalb der Fahrschienen (14) angeordnet sind.

9. Hubbalkenförderer nach einem der Ansprüche 1 bis 8, **dadurch gekennzeichnet, dass** der erste Fahrzylinder (15) und/oder der zweite Fahrzylinder (16) als doppelt wirkende hydraulische Differentialzylinder ausgebildet sind.

10. Hubbalkenförderer nach einem der Ansprüche 1 bis 9, **dadurch gekennzeichnet, dass** der erste Fahrzylinder (15) und der zweite Fahrzylinder (16) einzeln und/oder gemeinsam betätigbar sind.

11. Hubbalkenförderer nach einem der Ansprüche 1 bis 10, **dadurch gekennzeichnet, dass** der erste Fahrzylinder (15) und der zweite Fahrzylinder (16) simultan betätigbar sind.

## Claims

1. A walking beam conveyor (1) for the clocked transport of sheet metal coils (2), sheet stacks or similar cargo, with at least one walking beam (7) that can be lifted and lowered by means of lifting devices (5) between lateral support surfaces (4) and can be moved in transport direction (T) by means of at least one propulsion drive (6), **characterized in that** the propulsion drive (6) is designed as double drive, for example double cylinder drive with at least one first propulsion drive, for example propulsion cylinder (15) and at least one second propulsion drive moveable by means of the first propulsion drive (15), for example propulsion cylinder (16).

2. The walking beam conveyor according to Claim 1, **characterized in that** the second propulsion drive, for example propulsion cylinder (16) is moveably mounted relative to the first propulsion drive, for example propulsion cylinder (15) and to this end is connected for example to the piston rod (15a) of the first propulsion cylinder (15) and that the piston rod (16a) of the second propulsion cylinder (16) works on the walking beams (7).

3. The walking beam conveyor according to Claim 1 or 2, **characterized in that** the first propulsion cylinder (15) is mounted in a fixed location but capable of being swivelled if required.

4. The walking beam conveyor according to any one of the Claims 1 to 3, **characterized in that** a travelling car (18) moveable in transport direction is connected to the piston rod (15a) of the first propulsion cylinder (15), to which the second propulsion cylinder (16) is fastened.

5. The walking beam conveyor according to Claim 4, **characterized in that** the travelling car (18) can be moved on one or a plurality of cylinder travelling rails (19).

6. The walking beam conveyor according to any one of the Claims 1 to 5, **characterized in that** the piston rod (16a) of the second propulsion cylinder (16) is connected to the walking beam (7) via at least one connecting web (20).

7. The walking beam conveyor according to Claim 6, **characterized in that** the piston rod (16a) of the second propulsion cylinder (16) is articulated in a manner capable of being swivelled on the connecting web (20).

8. The walking beam conveyor according to any one of the Claims 1 to 7, wherein the lifting devices (5) are moveable on travelling rails (14), **characterized in that** the first propulsion cylinder (15) and the second propulsion cylinder (16) are arranged below the travelling rails (14).

9. The walking beam conveyor according to any one of the Claims 1 to 8, **characterized in that** the first propulsion cylinder (15) and/or the second propulsion cylinder (16) are designed as double acting hydraulic differential cylinders.

10. The walking beam conveyor according to any one of the Claims 1 to 9, **characterized in that** the first propulsion cylinder (15) and the second propulsion cylinder (16) can be actuated individually and/or jointly.

11. The walking beam conveyor according to any one of the Claims 1 to 10, **characterized in that** the first propulsion cylinder (15) and the second propulsion cylinder (16) can be actuated simultaneously.

## Revendications

1. Transporteur à poutre de levage (1) pour le transport par cycle de ballots de tôle (2), de paquets de tôle ou d'articles à transporter similaires,
comprenant au moins une poutre de levage (7) pouvant être soulevée et abaissée entre des surfaces de support (4) latérales au moyen de dispositifs de levage (5) et déplaçables au moyen d'au moins un entrainement de déplacement (6) dans le sens de transport (T),
**caractérisé en ce que**
l'entraînement de déplacement (6) est conçu sous forme d'entraînement double, par exemple un entraînement à double cylindre avec au moins un premier entraînement de déplacement, par exemple un cylindre de déplacement (15) et au moins un second entraînement de déplacement déplaçable au moyen du premier entraînement de déplacement (15), par exemple un cylindre de déplacement (16).

2. Transporteur à poutre de levage selon la revendication 1, **caractérisé en ce que** le second entraînement de déplacement, par exemple le cylindre de déplacement (16), est monté de manière déplaçable par rapport au premier entraînement de déplacement, par exemple le cylindre de déplacement (15), et est raccordé à cet effet par exemple à la tige de piston (15a) du premier cylindre de déplacement (15) et **en ce que** la tige de piston (16a) du second cylindre de déplacement (16) travaille sur la poutre de levage (7).

3. Transporteur à poutre de levage selon la revendication 1 ou 2, **caractérisé en ce que** le premier cylindre de déplacement (15) est monté de façon fixe, mais éventuellement pivotante.

4. Transporteur à poutre de levage selon l'une quelconque des revendications 1 à 3, **caractérisé en ce qu'**un chariot de déplacement (18) déplaçable dans le sens de transport, sur lequel le second cylindre de déplacement (16) est fixé, est raccordé à la tige du piston (15a) du premier cylindre de déplacement (15).

5. Transporteur à poutre de levage selon la revendication 4, **caractérisé en ce que** le chariot de déplacement (18) est déplaçable sur un ou plusieurs rails de déplacement pour cylindre (19).

6. Transporteur à poutre de levage selon l'une quelconque des revendications 1 à 5, **caractérisé en ce que** la tige de piston (16a) du second cylindre de déplacement (16) est raccordée à la poutre de levage (7) au moyen d'au moins une barrette de liaison (20).

7. Transporteur à poutre de levage selon la revendication 6, **caractérisé en ce que** la tige de piston (16a) du second cylindre de déplacement (16) est articulée de façon pivotante sur la barrette de liaison (20).

8. Transporteur à poutre de levage selon l'une quelconque des revendications 1 à 7, les dispositifs de levage (5) étant déplaçables sur des rails de déplacement (14), **caractérisé en ce que** le premier cylindre de déplacement (15) et le second cylindre de déplacement (16) sont disposés au-dessous des rails de déplacement (14).

9. Transporteur à poutre de levage selon l'une quelconque des revendications 1 à 8, **caractérisé en ce que** le premier cylindre de déplacement (15) et/ou le second cylindre de déplacement (16) sont réalisés sous forme de cylindres différentiels hydrauliques à effet double.

10. Transporteur à poutre de levage selon l'une quelconque des revendications 1 à 9, **caractérisé en ce que** le premier cylindre de déplacement (15) et le second cylindre de déplacement (16) peuvent être actionnés individuellement et/ou ensemble.

11. Transporteur à poutre de levage selon l'une quelconque des revendications 1 à 10, **caractérisé en ce que** le premier cylindre de déplacement (15) et le second cylindre de déplacement (16) peuvent être actionnés simultanément.
